# EUROPEAN PATENT APPLICATION

(11) **EP 0 685 382 A1**
(43) Date of publication of application: **06.12.1995**
(21) Application number: 95201418.1
(22) Date of filing: 31.05.1995
(51) Int. Cl.: B62D 33/06

(54) **Motor vehicle**

(30) Priority: 01.06.1994 NL 9400891
(71) Applicant: PLASTISOL N.V., Otrabanda Willemstad, Curaçao (AN)
(72) Inventor: Walraven, Rob, NL-5446 BL Wanroij (NL)
(74) Representative: Timmermans, Anthonius C.Th., Ir.

(57) **Abstract**

Motor vehicle equipped with a chassis (2) and a driver's cabin (4) supported by a chassis (2), which cabin (4) can be levered upwards from its in-use position around a hinging axis located close to the front of the chassis and extending transversely to the length-axis of the vehicle. The vehicle is equipped with a superstructure (8) made from plastic and forming an extension to the cabin (4) and situated behind the cabin. A door is situated in at least one side wall (9) of the superstructure (8). The superstructure (8) is affixed to the rear of the cabin (4) close to the superstructure's side facing the drivers cabin, in such a manner, that the cabin (4) and the superstructure (8) can be tilted together around the hinging axis.

## Description

The invention relates to a motor vehicle equipped with a chassis and a driver's cabin supported by a chassis, which cabin can be levered upwards from its normal in-use position around a hinging axis located close to the front of the chassis and extending transversely to the length-axis of the vehicle.

When such a vehicle is used by fire-fighting forces, aid providers or the like, a superstructure is usually present behind the cabin, which superstructure is generally employed for the transportation of personnel who must be transported in addition to the driver and his companion passenger. It is preferable thereby that the cabin and the superstructure should be in open connection with each other.

It is imaginable that the superstructure be fixed to a chassis. In such a case, special provisions must be made in order to ensure that, in the normal position of the cabin, the junction between the rear side of the cabin and the front of the superstructure is both dust proof and water-tight. The sealing means required hereby, however, will be sensitive to damage and/or wear and tear, so that such sealing means will require considerable maintenance and it still cannot be guaranteed that an effective sealing between the cabin and the superstructure can be maintained over a prolonged period of time.

In accordance with the invention, the vehicle is now equipped with a superstructure forming an extension to the cabin and situated behind the cabin, which superstructure is manufactured from plastic, within which superstructure at least one door is present in the side wall thereof, and which superstructure is affixed to the rear of the cabin close to that side of the superstructure facing the drivers cabin, in such a manner, that the cabin and the superstructure can be tilted together around the hinging axis.

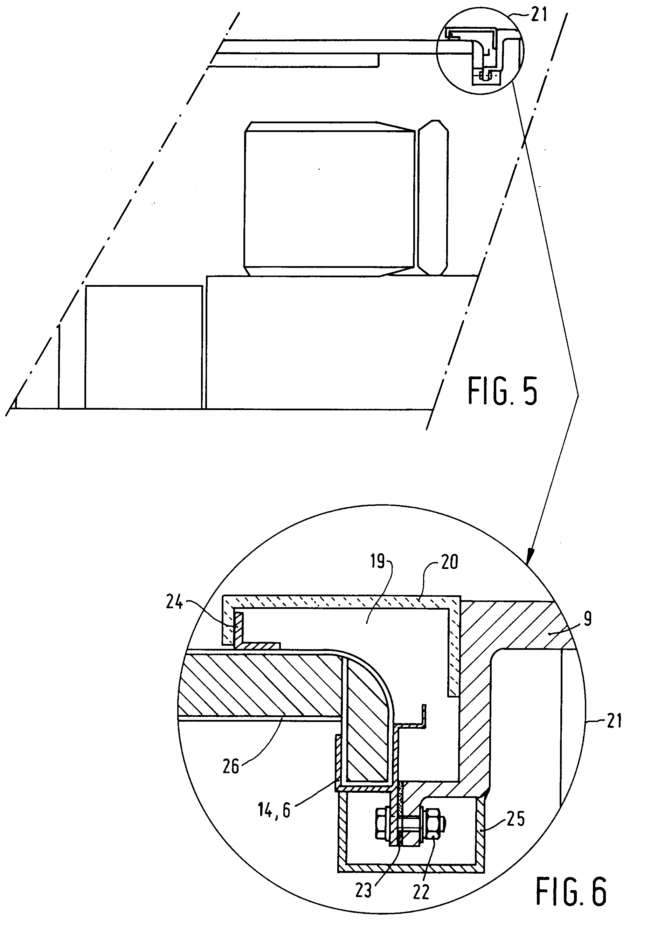

As a result of employing the construction according to the invention, a solid and closed connection can be achieved between the rear side of the cabin and the front of the superstructure, while the superstructure, thanks to its light construction which results from the use of plastic material, can be raised together with the lower hinged axis without incurring problems. A further advantage hereof is that the superstructure in its raised position does not obstruct access to the engine of the vehicle; this is in contrast to the application of a permanently-fixed superstructure, which might obstruct the desired access to the engine and its related aggregate to some extent. Figures 5 and 6 depict in detail the construction of the connection between the driver's cabin and the superstructure or crew cabin.

The invention will now be further elucidated on the basis of an example of an embodiment, provided in schematic form, of the construction according to the invention.

Figure 1 depicts a side view of a frontmost portion of a motor vehicle.

Figure 2 shows a plan view at two different levels of a cross-section over the portion of the motor vehicle depicted in figure 1.

Figure 3 depicts, on its right-hand side, a view of the superstructure viewed in the direction of arrow E, and, on its left-hand side, a view of the superstructure viewed in the direction of arrow G.

Figure 4 shows a view of the rear wall of the cabin as viewed in the direction of arrow G.

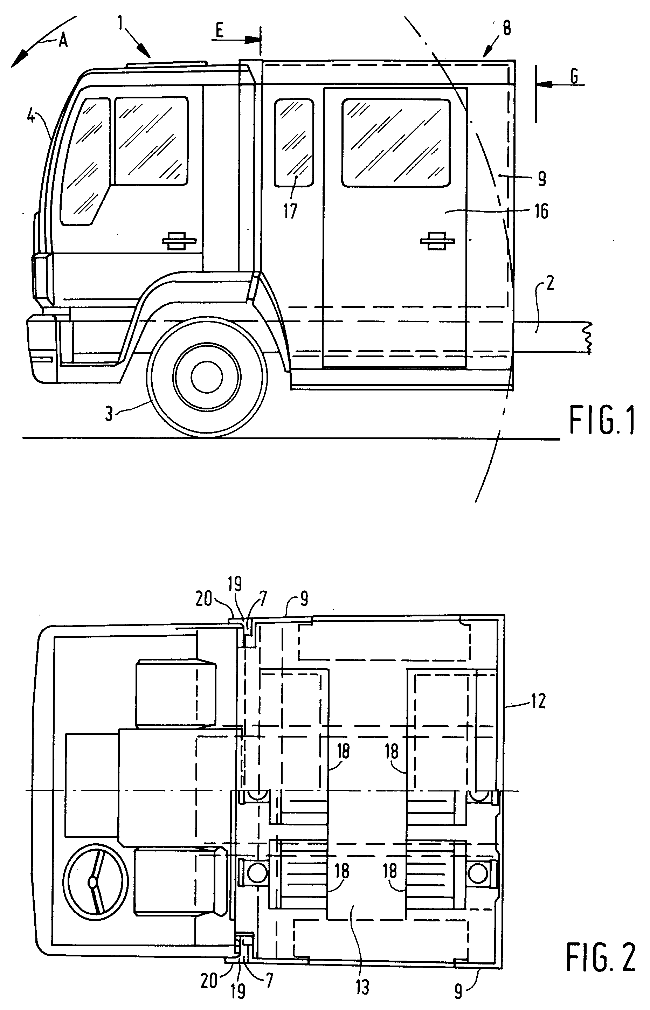

A side-view of a foremost portion of a motor vehicle (1) is provided in figure 1, which vehicle is equipped with a chassis (2) and steerable front wheels (3). The driver's cabin (4) is mounted on the frontmost portion of the chassis, in such a way that it can be tilted, in a well-known manner, from the normal in-use position of the cabin depicted in figures 1 and 2, around a horizontal axis located close to the front of the chassis (2) and extending transversely to the length-axis of the vehicle in the direction of arrow A, so as to provide access to the engine and its related aggregate. Such a construction is well known and shall therefore require no further explanation here.

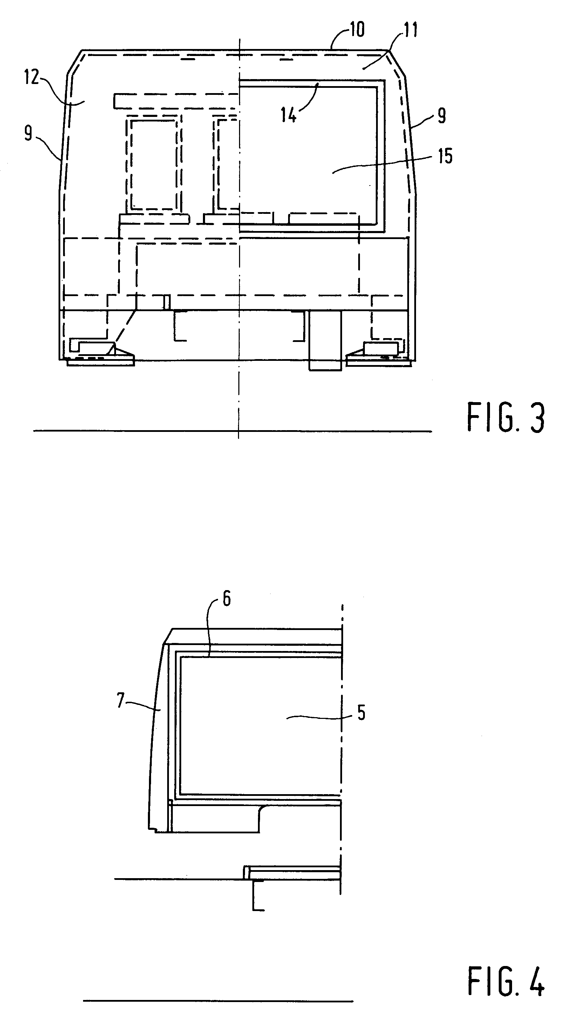

As is depicted in figure 4, a rectangular opening (5) is present in the rear side of the cabin, the edges of which opening are strengthened by a rectangular frame (6); the embodiment hereof is such that the side walls of the cabin, which are joined to part (7) of the rear wall, are also maintained.

A superstructure (8) is situated behind the cabin. This superstructure (8) forms an extension of the cabin (4) and is, among other things, equipped with side walls (9), roof (10, a front wall (11), a rear wall (12) and a floor (13).

In the front wall, an opening (15) which is bordered by a frame (14), is present in the front wall (11), the opening's dimensions matching those of the opening (5). A door (16) and windows (17) are applied in the side walls (9) of the superstructure. The interior of the superstructure contains an arrangement of benches (18) upon which aid-personnel can be seated.

The superstructure (8) is constructed entirely from plastic, and preferably from reinforced polyester, so that the total weight of the superstructure shall be relatively low.

The superstructure (8) is, especially when a rectangular window (6) and (14) is used, affixed with its front wall to the rear wall of the cabin through the use of, for example, bolts and/or adhesive couplings. It is clear that, in this manner, a firm and well-sealing connection between the front wall of the superstructure and the rear wall of the cabin (4) can be realised.
What is more, as a result of the light embodiment of the superstructure which is made from reinforced plastic, the superstructure can be raised upwardly together with the cabin from its in-use position depicted in the figures, in the direction of arrow A.

As is also evident in particular in figure 2, the joint between the side wall of the cabin and the rear wall in the depicted example embodiment employs curved components. The portion of the front side of the superstructure (8) which is located opposite the side portions of the rear wall is situated at some distance from the employed components (7) of the rear wall, so that cavities (19) are formed at the positions of the components (7) of the octagon between the rear wall of the cabin and the front wall of the vehicle. These cavaties can be covered with transparent panels (20), whereby lamps can be applied in the cavaties, which lamps, when switched on, may or may not be made to flash at intervals. Such an arrangement of lamps could be particularly advantageous if the vehicle is used as e.g. a fire tender or as a vehicle which is employed in response to accidents and/or for road repairs and the like, because of the fact that such lamps can provide an extremely good means of signalling.

It is evident from figures 5 and 6 that the superstructure (8) is affixed to the driver's cabin by means of a bolted connection 22 and under the application of glue 23 between the superstructure 9 and the frame 14, 6. The joining construction 21 as such represents a component of the invention. The frame 14, 6 provides for a particularly strong construction. A stainless steel sealing profile 24 is applied to the outer side. By means of gluing, a (transparent) panel 20 is affixed to the profile 24 and to the superstructure 8. The side wall of the driver's cabin is depicted with the reference number 26. The walls (such as 9) of the superstructure (8) are, according to the invention, preferably comprised of a known laminate of fibreglass/polyester; construction foam (preferably PVC); fibreglass/polyester. An extremely light yet rigid construction is created in this manner, which construction is admirably suited to use as superstructure to a tiltable cabin.

## Claims

1. Motor vehicle equipped with a chassis and a driver's cabin supported by a chassis, which cabin can be levered upwards from its in-use position around a hinging axis located close to the front of the chassis and extending transversely to the length-axis of the vehicle, characterised in that the vehicle is equipped with a superstructure forming an extension to the cabin and situated behind the cabin, and manufactured from plastic, within which superstructure at least one door is present in the side wall thereof, and which superstructure is affixed to the rear of the cabin close to the superstructure's side facing the drivers cabin, in such a manner, that the cabin and the superstructure can be tilted together around the hinging axis.

2. Motor vehicle according to claim 1, characterised in that, in the rear wall of the cabin and in the front wall of the superstructure, openings are present, which openings correspond largely to one another.

3. Motor vehicle according to claim 2, characterised in that the width of an opening, measured transversely to the direction of the length of the vehicle, is smaller than the width of the rear wall of the cabin.

4. Motor vehicle according to one of the preceding claims, characterised in that cavities are formed near the sides of the cabin between the rear wall of the cabin and the front side of the superstructure, which cavaties are covered with the aid of transparent panels, while lamps are applied in the cavaties.

5. Motor vehicle according to one of the preceding claims, characterised in that the superstructure is affixed to the cabin with the aid of a glued joint.

6. Motor vehicle according to one of the preceding claims, characterised in that the superstructure is affixed to the cabin with the aid of a bolted joint.

7. Superstructure apparently destined for application on a vehicle in accordance with one of the preceding claims.
